**Europäisches Patentamt**

**European Patent Office**

**Office européen des brevets**

(19)

(11) Veröffentlichungsnummer : **0 483 103 B1**

(12)

# EUROPÄISCHE PATENTSCHRIFT

(45) Veröffentlichungstag der Patentschrift :
**21.12.94 Patentblatt 94/51**

(51) Int. Cl.$^5$ : **G01C 15/00**

(21) Anmeldenummer : **91890250.3**

(22) Anmeldetag : **21.10.91**

(54) **Befestigungseinrichtung und Konsole zur Aufnahme von geodätischen Messgeräten.**

(30) Priorität : **22.10.90 AT 2127/90**

(43) Veröffentlichungstag der Anmeldung :
**29.04.92 Patentblatt 92/18**

(45) Bekanntmachung des Hinweises auf die
Patenterteilung :
**21.12.94 Patentblatt 94/51**

(84) Benannte Vertragsstaaten :
**AT CH DE IT LI**

(56) Entgegenhaltungen :
**DE-A- 2 517 609**
**US-A- 4 270 721**

(73) Patentinhaber : **Schelling, Günther, Dipl.-Ing.
Dr.
Merangasse 25
A-8010 Graz (AT)**

(72) Erfinder : **Schelling, Günther, Dipl.-Ing. Dr.
Merangasse 25
A-8010 Graz (AT)**

(74) Vertreter : **Krause, Walter, Dr. Dipl.-Ing.
Postfach 200
Singerstrasse 8
A-1010 Wien (AT)**

EP 0 483 103 B1

# EP 0 483 103 B1

## Beschreibung

Die Erfindung bezieht sich auf eine Tragevorrichtung für Meßgeräte mit einer an einem Befestigungsobjekt fest montierbaren Befestigungseinrichtung und mit einer Konsole, die über einen etwa parallel zur Oberfläche des Befestigungsobjektes angeordneten Bolzen an der Befestigungseinrichtung befestigbar ist, welche Konsole zur meßgerechten Aufnahme von geodätischen Meßgeräten im Bereich zumindest eines Meßzentrums der Konsole ausgebildet ist.

Dazu wird nachfolgend an Hand der Zeichnungen Fig. 1 bis Fig. 4 der Stand der Technik ausführlich erläutert. Es zeigen in schematischer Darstellung Fig. 1 ein bekanntes Holzstativ als Meßgeräteträger, die Fig. 1a und 1b hiezu Ausführungsvarianten und Fig. 1c ein Detail in größerem Maßstab, Fig. 2 die Anordnung mehrerer Meßstationen, Fig. 3 die Anordnung eines Meßpfeilers und Fig. 4 die Anordnung einer Konsole, beide bei einem Tunnelbauwerk.

Winkel-, Distanz- und Azimutmeßgeräte dienen der Messung von Richtungen, Horizontal- und Vertikalwinkeln, Schrägdistanzen und Azimuten. Zur meßgerechten Verwendung dieser Geräte (Theodolite, Distanzmeßgeräte, kombinierte Meßgeräte, Kreiseltheodolite u.a.) verwendet man bei temporären Messungen i.a. dreibeinige Holzstative St als Geräteträger in zentrischer Lage über einem markierten Bodenpunkt 1 oder unter einem markierten Firstpunkt 2. Der Geräteträger hat auch die relative Ruhelage der Meßgeräte 3 zum markierten Punkt, die Stellung zur Lotrichtung und die Ausrichtung zu einem frei wählbaren Richtungsanschlußpunkt für die Dauer der Messungen zu gewährleisten. Die starren oder ausziehbaren Stativbeine 6 werden - wenn möglich - auf einem befestigten Untergrund aufgestellt oder bei Lockerboden durch Eintreten der Stativbeinspitzen 7 in das Erdreich möglichst festgestellt.

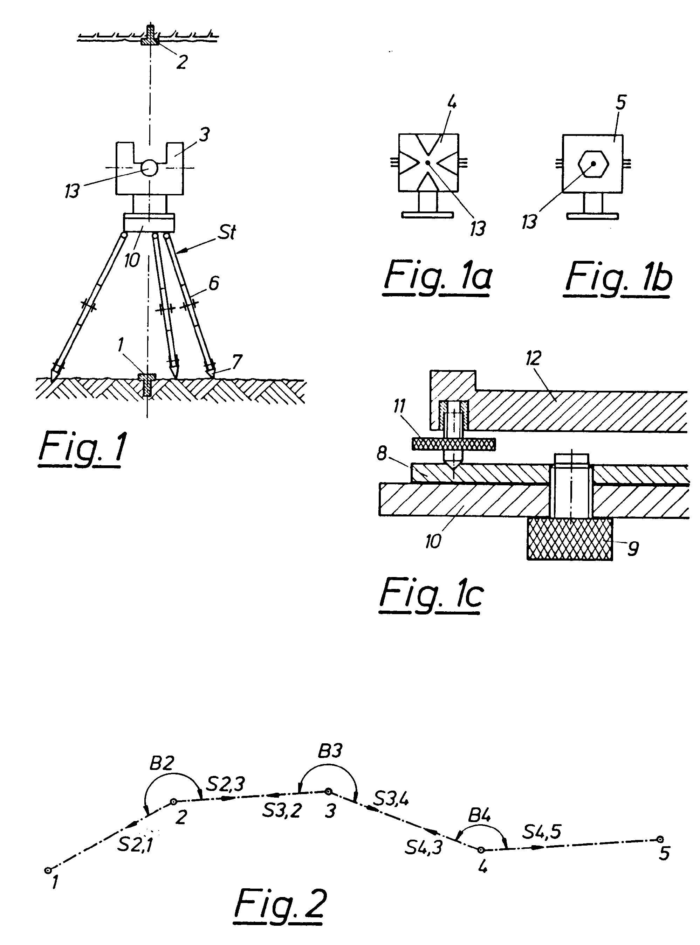

In analoger Weise werden auch benachbarte Zielpunkte durch Zielmiren 4 (Fig. 1a) und Reflektoren 5 (Fig. 1b) oder Kombinationen von beiden auf Stativen anzielbar gemacht. Der Austausch des Theodolits/Distanzmeßgerätes gegen Zielmiren/Reflektoren erfolgt in einem am Stativteller festzumachenden Untersatz. Die Grundplatte 8 des Untersatzes wird mittels einer Anzugsschraube 9 mit dem Stativteller 10 fest verbunden. Drei Fußschrauben 11 erlauben die Horizontierung der in die Aufnahme 12 wahlweise einsetzbaren, austauschbaren Meß- und Zielgeräte, deren Zentren 13 hiebei ihre räumliche Lage relativ zum Untersatz bewahren.

Bei der Messung der Winkel und Strecken in und zwischen aufeinanderfolgenden Stationen ist daher jedes Stativ in zeitlicher Aufeinanderfolge Träger

a) einer Zielmire 4 (ZM), eines Reflektors 5 (R) oder einer Kombination
b) eines Theodolits (TH), Distanzmeßgerätes (DM) oder Kombination
c) wieder einer Einrichtung, wie unter a) beschrieben.

In der folgenden Tabelle werden mit Bezugnahme auf die beispielhafte Konfiguration von Meßstationen in Fig. 2 die in den Stationen 2, 3 und 4 in zeitlicher Aufeinanderfolge zu messenden Größen (Brechungswinkel B, Zenitwinkel Z, Schrägdistanz S) den auf den jeweiligen Stationen benötigten Einrichtungen (Zielmire/Reflektor ZM/R, Theodolit/Distanzmeßgerät TH/DM) gegenübergestellt.

| Meßgrößen | Stationen | | | | |
|---|---|---|---|---|---|
| | 1 | 2 | 3 | 4 | 5 |
| B2  Z2,1  Z2,3  S2,1  S2,3 | ZM/R | TH/DM | ZM/R | – | – |
| B3  Z3,2  Z3,4  S3,2  S3,4 | – | ZM/R | TH/DM | ZM/R | – |
| B4  Z4,3  Z4,5  S4,3  S4,5 | – | – | ZM/R | TH/DM | ZM/R |

Als die bedeutendste Anwendung dieser polygonalen Methode mit Zwangszentrierung ist die Vortriebsabsteckung und die Vortriebskontrolle von Tunneln hervorzuheben, bei der, je nach Länge der Vortriebsstrecke, bis zu zwanzig und mehr Stationen aufeinanderfolgen. Die dem derzeitigen Stand der Technik entsprechende Standardmethode im Tunnel bezieht für jede Meßstation nicht nur die beiden benachbarten, sondern zur Erhöhung der Redundanz auch die beiden nächst weiter entfernten Stationen in die Messung ein. Am Meßprozeß auf einer Station sind daher vier weitere Stationen als Zielpunkte beteiligt. Eine vom Patent-

2

werber entwickelte "Methode der symmetrischen Polygonketten" erhöht die Anzahl der an einem Meßvorgang beteiligten Stationen auf zehn.

Zur Abschätzung der Genauigkeit und des Vertrauensbereiches der aus den Meßgrößen abgeleiteten Ergebnisse (Koordinaten, Höhen, Richtungswinkel) werden statistische Verfahren angewandt. Diese gehen ausschließlich von stochastischen Meßfehlern aus, nehmen also die während des gesamten Meßprozesses unveränderte Lage aller beteiligter Stationen als Voraussetzung an. Die Zuverlässigkeit der Meßergebnisse, der aus diesen abgeleiteten Resultate, hängt daher in geradezu fundamentaler Weise davon ab, daß während der Zeitdauer, in der jedes Stativ am Meßprozeß als Träger von Meßeinrichtungen (TH/DM, ZM/R) beteiligt ist, an diesem keine auch noch so kleine Lage- und Höhenänderungen eintreten.

Solche Veränderungen können sich ergeben durch das Einsinken der Stativbeine in den Untergrund, durch gelockerte Schraubverbindungen, durch Gelenkspiel, durch Feuchtigkeitsaufnahme der Holzstative, durch Temperaturänderungen, häufig aber auch durch ein unbeabsichtigtes und unbemerktes leichtes Anstoßen, ferner durch Erschütterungen durch vorbeifahrende Fahrzeuge oder durch von rotierenden Maschinen ausgehenden Vibrationen.

Es ist daher verständlich, wenn, wie bekannt, zur Vermeidung der vielen angeführten Fehlerquellen stabile Aufstellmöglichkeiten in Betracht gezogen werden:

Betonpfeiler werden wegen der hohen Kosten ihrer Herstellung häuptsächlich bei hochwertigen Anlagen verwendet, wenn die Stationen über eine lange Zeit benötigt werden. Sie können aber nur dort eingesetzt werden, wo der Raumbedarf dies zuläßt.

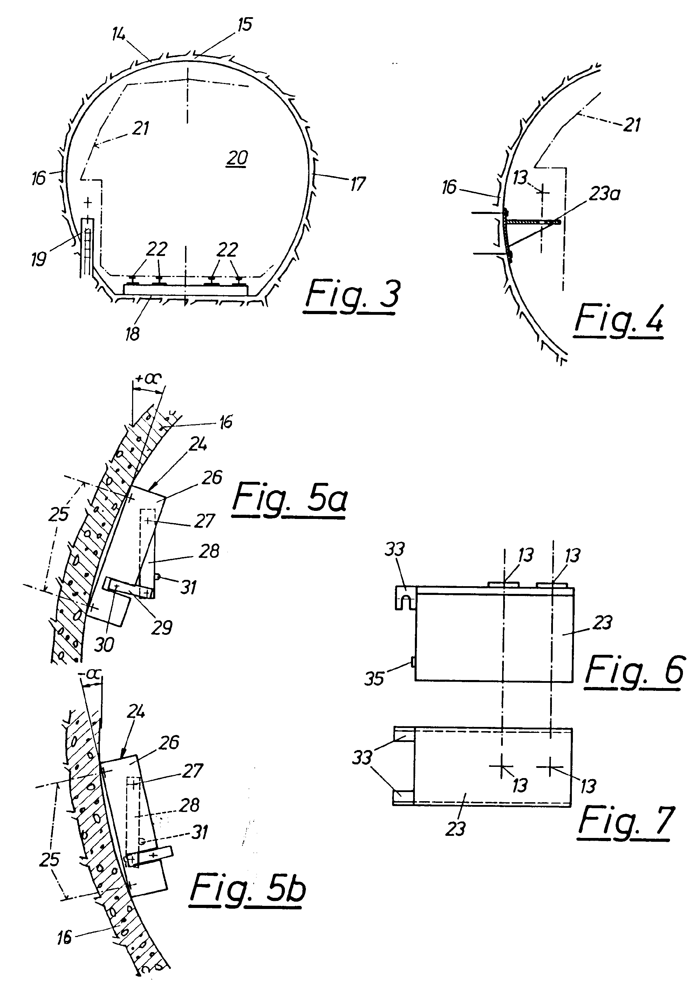

In Tunneln, wo man (Fig. 3) den oberen gewölbten Teil 14 als Kalotte und davon den höchstgelegenen Bereich 15 als First, die beiden Seitenflächen 16 und 17 als Ulme und den unteren, flachen Teil 18 als Sohle bezeichnet, ist die Anordnung von Meßpfeilern 19, wenn überhaupt, nur in der extremen seitlichen Randlage möglich, weil für den während der Herstellung des Tunnelbauwerkes laufenden Verkehr der Baumaschinen und Baufahrzeuge ein Großteil des Tunnelquerschnittes 20, entsprechend dem festgelegten Lichtraumprofil 21 freigehalten werden muß. Aber selbst bei dieser peripheren Anordnung sind Pfeiler den Beschädigungen oder Zerstörungen, die durch schwere Bohr-, Schutter- und Transportgeräte verursacht werden, ausgesetzt. Hiebei bietet erfahrungsgemäß auch ein Verkehr auf Gleisen 22 keine ausreichende Sicherheit. Die größte Gefahr geht hierbei von kleinen Beschädigungen aus, die bei Ansehung des Betonpfeilers nicht erkannt werden können, dennoch aber eine Verschiebung des Meßzentrums bewirken oder die Stabilität z.B. durch eine Teilabtrennung vom Fundament beeinträchtigen. Da diese Mängel nicht erkannt werden, bleiben auch die dadurch induzierten Meßfehler ohne Beachtung.

Aus der US-A 4 270 721 ist eine Tragevorrichtung für Meßgeräte der eingangs genannten Art bekannt, die an einer Klemmeinrichtung, die an Säulen oder Pfeilen befestigt werden kann, drehbar und über einen ausziehbaren Arm orientierbar ist. In Folge des Gelenkspiels zwischen den einzelnen beweglichen Teilen können Meßungenauigkeiten auftreten.

Ferner ist aus der DE-AS 25 17 609 eine Haltevorrichtung für geodätische Instrumente bekannt, bei der eine Instrumentenplatte gegenüber der Befestigung an einem Mast mittels zweier um lotrechte Achsen drehbaren Schwenkarme in annähernd horizontaler Lage so nahe über einen markierten Bodenpunkt gebracht werden kann, daß die Achse des geodätischen Instrumentes durch eine Verschiebung des Instrumentes auf der Instrumentenplatte lotrecht über die Bodenmarkierung zu stehen kommt. Durch die große Zahl an beweglichen Teilen ist die Einstellung dieser Haltevorrichtung auf eine bestimmte Lage sehr kompliziert. Die Gefahr von Meßfehlern in Folge des notwendigen Spieles zwischen den beweglichen Teilen ist groß.

Aus den bereits genannten Gründen ist die Errichtung von Mästen, Säulen oder Pfeilern in Tunneln problematisch, so daß die Verwendung von pfeilerfixierten Halte- bzw, Tragevorrichtungen für geodätische Meßinstrumente in Tunnels nur eingeschränkt möglich ist.

Bekannt ist auch die Verwendung stabiler, an der Tunnel-Ulme befestigter Konsolen 23a, siehe hiezu Fig. 4. Diese Konsolen bieten zwar den Vorteil hoher Stabilität und geringer Beschädigungsanfälligkeit, wegen ihrer permanenten Existenz dürfen sie jedoch nicht in das Lichtraumprofil 21 hineinreichen. Der Meßpunkt, das Meßzentrum 13, kommt daher sehr nahe an die Ulme 16 zu liegen (0,2 bis 0,3 m). Zufolge der im Tunnelquerschnitt i.a. etwa axialsymmetrischen Temperaturverteilung mit von der Ulme zur Achse degressiv abnehmenden Gradientenbeträgen, werden Messungen mit optischen Geräten in Ulmennähe durch die bestehende, aber nicht erfaßte Refraktionswirkung verfälscht. Der bei der Einzelmessung nach dem derzeitigen Stand der Technik nicht genau genug erfaßbare Fehlereinfluß beträgt jedoch häufig ein Vielfaches der sonstigen, unvermeidbaren Meßfehler. Deshalb kommen ulmennahe Aufstellungspunkte für genauere Messungen nicht in Frage.

Die Erfindung geht aus von einer solchen Meßeinrichtung mit einer an einem Befestigungsobjekt, wie einer Wand, Mauer, Tunnelulme etc., befestigten Konsole zur Aufnahme von geodätischen Meßgeräten.

Ziel der Erfindung ist es, unter Vermeidung der genannten Nachteile, eine Tragervorrichtung mit einer Konsole zur stabilen Aufnahme von geodätischen Meßgeräten derart weiterzuentwickeln, daß eine einfache Fixierbarbeit bzw. Abnehmbarkeit der Konsole ermöglicht wird, wobei mit der Tragevorrichtung Messungen mit hoher Genauigkeit durchführbar sein sollen. Dabei soll eine hohe Flexibilität in der Anordnung von Meßstationen zur Verfügung stehen und die Forderung der vorteilhaften Verwendbarkeit in Tunnels erfüllt werden.

Dieses Ziel wird erfindungsgemäß dadurch erreicht, daß der Bolzen als im wesentlichen horizontal an der Befestigungseinrichtung befestigter Anlenkbolzen ausgeführt ist und die Konsole am oberen Ende eine mit nach unten weisenden Ausnehmungen versehene Tragleisteanordnung aufweist, wobei die Konsole mittels der Ausnehmungen an der Tragleisteanordnung von oben auf den Anlenkbolzen einhängbar ist, und daß die Befestigungseinrichtung distanziert vom Anlenkbolzen in ihrem unteren Bereich einen Stützpunkt für die Konsole aufweist, dessen Entfernung vom Befestigungsobjekt durch eine Verstelleinrichtung veränderbar ist.

Diese erfindungsgemäße Tragevorrichtung gestattet gegenüber den bekannten Konsolen eine wesentlich erhöhte Meßgenauigkeit und erfüllt alle Punkte der Aufgabenstellung. Neben den funktionellen Vorteilen bietet die erfindungsgemäße Tragevorrichtung auch wirtschaftliche Vorteile auf Grund der wesentlich geringeren Herstellungskosten, insbesondere bei der Verwendung in Tunneln. Anstelle von etwa hundert Stück Vollkonsolen für einen Tunnel von etwa zehn km Länge werden nur mehr hundert billig herzustellende Befestigungseinrichtungen zur Konsolenaufnahme benötigt. Die je nach Methode erforderlichen fünf oder zehn Konsolen sind, wie die Meßgeräte selbst, Investitionsgüter mit einer wirtschaftlichen Nutzungsdauer von mindestens fünf Jahren. Der einfache mögliche Auf- und Abbau der Konsole von der Befestigungseinrichtung minimalisiert die Beschädigungswahrscheinlichkeit. Weiters bewirkt der relativ große Abstand der Meßpunkte von Hindernissen eine Unempfindlichkeit gegenüber der Wirkung einer Horizontalfraktion.

Durch die Verstelleinrichtung ist es auch bei einem erweiterten Neigungsbereich des Befestigungsobjektes möglich, die Konsole präzise in eine horizontale Lage zu bringen.

In weiterer Ausgestaltung der Erfindung ist vorgesehen, daß die Befestigungseinrichtung einen U-förmigen Grundkörper aufweist, in dessen Schenkel der Anlenkbolzen gelagert ist. Vorteilhafterweise kann dabei vorgesehen sein, daß die Tragleisteanordnung zwei Tragleisten aufweist, wobei der Abstand der einander abgewendeten Außenflächen der Tragleisten dem Abstand der Innenflächen der beiden Schenkel des U-förmigen Grundkörpers gleich ist.

Eine vorteilhafte Ausführung dazu besteht darin, daß die Schenkel des U-förmigen Grundkörpers je einen Schlitz aufweisen, und daß die Verstelleinrichtung mit einer um den Anlenkbolzen schwenkbar gelagerten Stütze versehen ist, die an dem dem Anlenkbolzen gegenüberliegenden Ende über einen Verbindungsbolzen mit einer Strebe gelenkig verbunden ist, wobei die Strebe in den Schlitzen der Schenkel geführt und durch z.B. Klemmschrauben an den Schenkeln feststellbar ist.

Ein genauer Sitz der Konsole wird dadurch ermöglicht, daß der Stützpunkt an der Stütze und im unteren Bereich der Konsole dazu ein Gegenstück vorgesehen ist.

Geht man davon aus, daß bei einer bestimmten Konstruktionsart der Konsole, definierter Lage des Meßzentrums oder der Meßzentren und einem Regelgewicht der Meßeinrichtung eine Regeldurchbiegung der Konsole entsteht, so kann für jede Abweichung vom Regelgewicht die Abweichung von der Regeldurchbiegung entweder berechnet oder empirisch ermittelt werden und mittels Verstellung der Fußschrauben in Figur 1c völlig kompensiert werden.

In weiterer Ausgestaltung der Erfindung kann die am Befestigungsobjekt fest montierbare Befestigungseinrichtung so ausgebildet sein, daß Konsolen unterschiedlicher Länge mit einem oder mehreren Meßzentren wahlweise befestigbar sind. Hiedurch ergibt sich eine wesentlich höhere Flexibilität des Konsolensystems.

Nachfolgend wird die Erfindung an Ausführungsbeispielen näher erläutert. Es zeigen in vorwiegend schematischer Darstellung:

| | |
|---|---|
| Fig. 5a und 5b | ein erstes Ausführungsbeispiel der Tragevorrichtung gemäß der Erfindung für zwei gegenüber der Lotrichtung in unterschiedlicher Weise geneigten Tunnelwandung, |
| Fig. 6 und 7 | eine Konsole mit zwei Meßzentren in Ansicht bzw. Draufsicht, |
| Fig. 8 | zeigt das Prinzip der erfindungsgemäßen Tragevorrichtung, |
| Fig. 9 | ein Ausführungsbeispiel gemäß der Erfindung und |
| Fig. 10 und 11 | Ausführungsvarianten von Details der Ausführung nach Fig. 9 in axometrischer Darstellung. |

Gleichartige Teile sind mit denselben Bezugszeichen versehen.

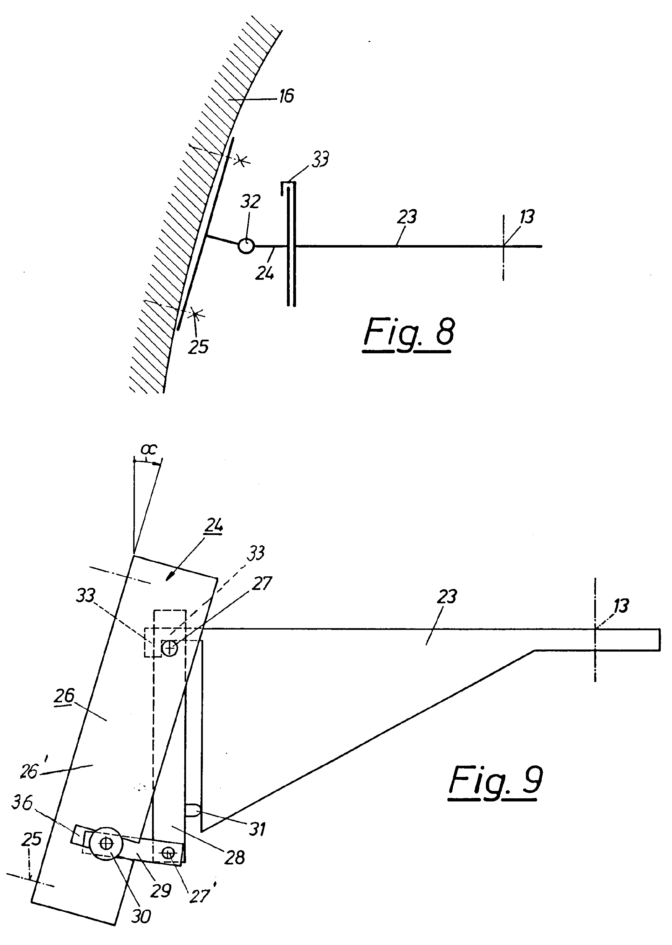

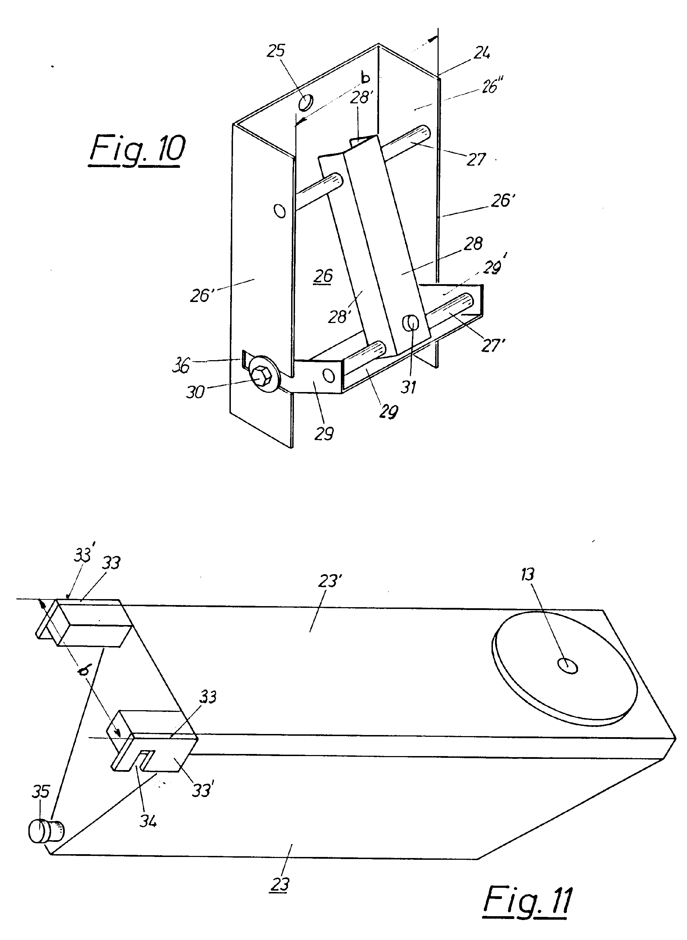

Die Befestigungseinrichtung nach den Fig. 5a und 5b für die Konsole 23 (Fig. 6 und 7) ist generell mit 24 bezeichnet und ist mit geeigneten Befestigungsmitteln 25 am Befestigungsobjekt (Wand, Mauer, Pfeiler, Fels, Tunnelulme) 16 unmittelbar zu befestigen. Je nach der Befestigungsart ist die Konsolenaufnahmeeinrichtung nach dem Ablauf ihrer Funktion wieder rückgewinnbar. Die Befestigungseinrichtung 24 (Fig. 5a, 5b, 9 und 10) ermöglicht die annähernd horizontale Positionierung der mobilen Konsole 23, unabhängig vom Ausmaß der positiven (Fig. 5a) oder negativen (Fig. 5b) Neigung der Befestigungsfläche zur Lotrichtung innerhalb des für eine praktische Anwendung in Frage kommenden Neigungsbereiches. Die Konsolen-Befestigungseinrichtung 24 gewährleistet durch entsprechende Führungseinrichtungen, daß sich die Meßzentren 13 der mobilen Konsole 23 nach jeder neuen Fixierung an der Konsolen-Befestigungseinrichtung in derselben relativen Raumposition befinden und zwar innerhalb herstellungsbedingter definierbarer Grenzen. Vergleiche hiezu die Fig. 9 und 10 und die zugehörige Beschreibung, wo die mit denselben Bezugszeichen versehenen Einzelheiten verdeutlicht sind.

Die mobile Konsole 23 (Fig. 6, 7, 9 und 11), ist eine ebene Plattform mit einer ausreichenden Steifigkeit um räumliche Bewegungen der Meßzentren 13 oder Vibrationen als Folge der während des Meßvorganges erforderlichen Manipulationen zu verhindern. Zur Befestigung der Konsole 23 an der Befestigungseinrichtung 24 dient die ein U-förmiges Profil aufweisende Tragleiste 33 mit der Ausnehmung 34. Die erforderliche Steifigkeit kann erreicht werden durch entsprechende Materialwahl und Dimensionierung der Plattform, durch Ausbildung als Fachwerk oder Profilkonstruktion. Zur Vermeidung von Vibrationen sind schwingungsdämpfende Mittel einsetzbar.

In der Prinzipskizze Fig. 8 ist die Konsolen-Befestigungseinrichtung 24 so gestaltet, daß eine daran mit ihrer Tragleiste 33 befestigte Konsole 23 horizontal ist. Ein schematisch angedeuteter Gelenkmechanismus 32 ist in der diese Arbeitsstellung der Konsole bewirkenden Lage fixierbar. Die Fixierung ist aus Gründen der Deutlichkeit nicht dargestellt.

Die Fig. 9 zeigt im Aufriß die Konsolen-Befestigungseinrichtung 24, bestehend aus einem U-förmig gestalteten Grundkörper 26 mit einem in dessen Schenkeln 26′ gelagerten Anlenkbolzen 27. Die um den Anlenkbolzen 27 schwenkbare Stütze 28 kann mittels der Strebe 29, die ihrerseits in Schlitzen 36 in den Schenkeln 26′ geführt ist, lotrecht gestellt, und mittels der Klemmschraube 30 fixiert werden. Die Halterung und exakte Führung der Konsole 23 normal zur Zeichenebene erfolgt an den Schenkeln 26′ des Grundkörpers 26 bzw. am Anlenkbolzen 27, wobei z.B. die Konsolenbreite der lichten Innenweite des U-förmigen Grundkörpers 26 entsprechen kann. Vorliegend weist die Konsole 23 eine mit einem U-förmigen Profil versehene Tragleiste 33 auf, welche im montierten Zustand den Anlenkbolzen 27 umgreift.

Die Konsole 23 stützt sich am Stützpunkt 31 der Stütze 28 ab. Die Konsolen-Befestigungseinrichtung 24 ist entsprechend einem zur Lotrichtung um den Winkel $\alpha$ geneigten Befestigungsobjekt (z.B. Tunnelulme) dargestellt, während sich die Konsole 23 in der gewünschten horizontalen Lage befindet, wie es der funktionellen Forderung entspricht. Die Konstruktion der Konsolen-Befestigungseinrichtung 24 ist so gestaltet, daß nach Hochklappen der Strebe 29 die Stütze 28 in den Grundkörper 26 nach einwärts geklappt werden kann, sodaß die Verwendung der Vorrichtung auch bei negativem Winkel $\alpha$ möglich ist, siehe auch die Fig. 5a und 5b.

Bei der in Fig. 10 dargestellten Ausführungsvariante der Konsolen-Befestigungseinrichtung 24 ist der Grundkörper 26 U-förmig ausgebildet. Der Anlenkkolben 27 ist in den Schenkeln 26′ des Grundkörpers 26, der Verbindungsbolzen 27′ zwischen Stütze 28 und Strebe 29 in den Schenkeln 29′ der Strebe 29 gelagert. Der Anlenkbolzen 27 und der Verbindungsbolzen 27′ ihrerseits sind in den Schenkeln 28′ der im Querschnitt U-förmigen Stütze 28 gelagert.

Eine zu dieser Befestigungseinrichtung 24 passende Konsole 23 mit einem Meßzentrum 13 ist in Fig. 11 dargestellt. Deren prismatischer Grundkörper 23′ weist im wesentlichen einen dreieckförmigen Querschnitt auf und ist mit Tragleisten 33 versehen, deren schlitzförmige Ausnehmungen 34 zum Einhängen in den Anlenkbolzen 27 dienen. Zwecks Führung durch die Schenkel 26′ des Grundkörpers 26 ist der mit b bezeichnete Abstand der beiden Stirnflächen 33′ der Tragleisten 33 gleich der auch mit b bezeichneten lichten Weite des Grundkörpers 26 (Fig. 10). Die vorzugsweise im untersten Bereich der Konsole angebrachte Stütze 35 kommt im zusammengebauten Zustand am Stützpunkt 31 zur Auflage.

Zur meßgerechten Aufnahme geodätischer Meßgerät ist die Konsole 23 an der Befestigungseinrichtung 24 so zu befestigen, daß die Fläche des prismatischen Körpers 23′, an welcher das Meßzentrum 13 angebracht ist, horizontal ist. Unter "horizontal" wird eine Annäherung an die Normalebene auf die Lotrichtung am Meßort verstanden, die es mit Hilfe der an den geodätischen Meßinstrumenten vorgesehenen Fußschrauben 11 (Fig. 1c) ermöglicht, die Stehachse dieser Instrumente lotrecht zu stellen. Diesem Zwecke dienen an der Konsole 23 die beiden Tragleisten 33 mit den Ausnehmungen 34 sowie der Stützpunkt 35 an der Befestigungseinrichtung 24 der Anlenkbolzen 27 und der an der Stütze 28 angebrachte Stützpunkt 31. Es wird so ein Konsolensystem geschaffen, bei dem die Konsolen 23 nur während der Zeit der Durchführung von Messungen mit den Befestigungseinrichtungen 24 fest verbunden sind. Außerhalb der Meßzeiten sollen die Konsolen von den Befestigungseinrichtungen 24 getrennt werden. Dabei muß gewährleistet sein, daß nach dem Wiederanbringen der Konsole 23 an den Befestigungseinrichtungen 24 sich der Meßpunkt 13 relativ zur Befestigungseinrichtung 24 wieder exakt in derselben Raumposition befindet und die Konsole 23 horizontal ist. Da während der Messung eines Polygonzuges (Fig. 2) laufend die Konsolen an den abgearbeiteten Stationen abgebaut und an den in Meßrichtung neu hinzukommenden Stationen eingerichtet werden müssen, ist es wichtig, daß der Abbau- und Aufbauvorgang einfach und rasch erfolgt. Dies wird erfindungsgemäß dadurch erreicht, daß die Konsole 23 aufgrund ihrer Konstruktionsprinzipien ohne Schrauben oder andere Befestigungsmittel bezüglich der Befestigungseinrichtung 24 eine stabile Lage einnimmt und trotzdem die Führungsgenauigkeit erreicht wird, welche die idente Raumlage des Meßpunktes 13 nach jedem Aufbau sicherstellt.

**Patentansprüche**

1. Tragevorrichtung für Meßgeräte mit einer an einem Befestigungsobjekt (16) fest montierbaren Befestigungseinrichtung (24) und mit einer Konsole (23), die über einen etwa parallel zur Oberfläche des Befestigungsobjektes (16) angeordneten Bolzen (27) an der Befestigungseinrichtung (24) befestigbar ist, welche Konsole (23) zur meßgerechten Aufnahme von geodätischen Meßgeräten im Bereich zumindest eines Meßzentrums (13) der Konsole (23) ausgebildet ist, **dadurch gekennzeichnet**, daß der Bolzen als im wesentlichen horizontal an der Befestigungseinrichtung (24) befestigter Anlenkbolzen (27) ausgeführt ist und die Konsole (23) am oberen Ende eine mit nach unten weisenden Ausnehmungen (34) versehene Tragleisteanordnung (33) aufweist, wobei die Konsole (23) mittels der Ausnehmungen (34) an der Tragleisteanordnung (33) von oben auf den Anlenkbolzen (27) einhängbar ist, und daß die Befestigungseinrichtung (24) distanziert vom Anlenkbolzen (27) in ihrem unteren Bereich einen Stützpunkt (31) für die Konsole (23) aufweist, dessen Entfernung vom Befestigungsobjekt (16) durch eine Verstelleinrichtung (28 bis 30) veränderbar ist.

2. Vorrichtung nach Anspruch 1, **dadurch gekennzeichnet**, daß die Befestigungseinrichtung (24) einen U-förmigen Grundkörper (26) aufweist, in dessen Schenkel (26′) der Anlenkbolzen (27) gelagert ist.

3. Vorrichtung nach Anspruch 2, **dadurch gekennzeichnet**, daß die Tragleisteanordnung zwei Tragleisten (33) aufweist, wobei der Abstand (b) der einander abgewendeten Außenflächen (33′) der Tragleisten (33) dem Abstand (b) der Innenflächen (26″) der beiden Schenkel (26′) des U-förmigen Grundkörpers (26) gleich ist.

4. Vorrichtung nach Anspruch 2 oder 3, **dadurch gekennzeichnet**, daß die Schenkel (26′) des U-förmigen Grundkörpers (26) je einen Schlitz (36) aufweisen, und daß die Verstelleinrichtung (28 bis 31) mit einer um den Anlenkbolzen (27) schwenkbar gelagerten Stütze (28) versehen ist, die an dem dem Anlenkbolzen (27) gegenüberliegenden Ende über einen Verbindungsbolzen (27′) mit einer Strebe (29) gelenkig verbunden ist, wobei die Strebe (29) in den Schlitzen (36) der Schenkel (26′) geführt und durch z.B. Klemmschrauben (30) an den Schenkeln (26′) feststellbar ist.

5. Vorrichtung nach Anspruch 4, **dadurch gekennzeichnet**, daß der Stützpunkt (31) an der Stütze (28) und im unteren Bereich der Konsole (23) dazu ein Gegenstück (35) vorgesehen ist.

6. Vorrichtung nach einem der Ansprüche 1 bis 5, **dadurch gekennzeichnet**, daß die am Befestigungsobjekt (16) fest montierbare Befestigungseinrichtung (24) derart ausgebildet ist, daß sie für Konsolen (23) unterschiedlicher Länge mit einem oder mehreren Meßzentren (13) geeignet ist.

**Claims**

1. A supporting device for measuring instruments comprising a mounting device (24) to be permanently attached to a mounting object (16), and a console (23) to be attached to the mounting device (24) by means of a bolt (27) located approximately parallel to the surface of the mounting object (16), which console (23) is designed to hold geodetic measuring instruments in at least one measuring centre (13) of the console (23) in a way immediately suitable for measurement, **wherein** the bolt is configured as a link pin (27) fastened to the mounting device (24) in essentially horizontal direction, and the upper end of the console (23) is provided with a mounting assembly (33) with downward facing apertures (34), the said apertures (34) of the mounting assembly (33) permitting the console (23) to be hooked onto the link pin (27) from above, and wherein the mounting device (24) is provided in its lower part, at a distance from the link pin (27), with a supporting knob (31) for the console (23), whose distance from the mounting object (16) can be varied by means of an adjusting device (28 to 30).

2. A device as in claim 1, **wherein** the mounting device (24) comprises a U-shaped body (26) whose side walls (26′) bear the link pin (27).

3. A device as in claim 2, **wherein** the mounting assembly has two mounting strips (33), the distance (b) between the exterior surfaces (33') of the mounting strips (33) facing away from each other being equal to the distance (b) of the interior surfaces (26") of the two side walls (26') of the U-shaped body (26).

4. A device as in claim 2 or 3, **wherein** the side walls (26') of the U-shaped body (26) have a slot (36) each, and wherein the adjusting device (28 to 31) is provided with a support (28) pivoted on the link pin (27), which support (28), at its end opposite of the link pin (27), is joined to a brace (29) by means of a coupling pin (27'), the said brace (29) being guided in the slots (36) of the side walls (26'), where it may be fixed by locking screws (30), for example.

5. A device as in claim 4, **wherein** the supporting knob (31) is located on the support (28), a counterpart (35) being provided in the lower part of the console (23).

6. A device as in any of claims 1 to 5, **wherein** the mounting device (24) to be permanently attached to the mounting object (16) is configured in such a way as to permit the use of consoles (23) of different lengths with one or more measuring centres (13).

**Revendications**

1. Dispositif de support pour des appareils de mesure avec un appareillage de fixation (24) susceptible d'être monté à poste fixe contre un objet de fixation (16) et avec une console (23) qui est susceptible d'être fixée à l'appareillage de fixation (24) par l'intermédiaire d'un axe (27) disposé à peu près parallèlement à la surface de l'objet de fixation (16), cette console (23) étant prévue pour recevoir d'une façon convenable pour les mesures des appareils de mesure géodésiques dans la zone d'au moins un centre de mesure (13) de la console (23), caractérisé en ce que l'axe est réalisé sous la forme d'un axe d'articulation (27) fixé horizontalement sur l'appareillage de fixation (24), et la console (23) comporte à son extrémité supérieure un arrangement de tasseau (33) muni d'évidement (34) dirigé vers le bas, tandis que la console (23) est susceptible d'être accrochée à partir du haut sur l'axe d'articulation (27) et en ce que l'appareillage de fixation (24) comporte à une certaine distance de l'axe d'articulation (27) dans sa zone inférieure un point d'appui (31) pour la console (23), dont l'éloignement de l'objet de fixation (16) est susceptible d'être modifié par un dispositif de réglage (28 à 30).

2. Dispositif selon la revendication 1, caractérisé en ce que l'appareillage de fixation (24) comporte un corps de base (26) en forme de U dans les côtés (26') duquel est monté l'axe d'articulation (27).

3. Dispositif selon la revendication 2, caractérisé en ce que l'agencement de tasseau comporte deux tasseaux (33), la distance (b) des surfaces externes (33') opposées l'une à l'autre des tasseaux (33) étant identique à la distance (b) des surfaces internes (26") des deux côtés (26') du corps de base (26) en forme de U.

4. Dispositif selon la revendication 2 ou la revendication 3, caractérisé en ce que les côtés (26') du corps de base en forme de U (26) comportent chacun une échancrure (36), et en ce que le dispositif de réglage (28 à 31) est muni d'un appui (28) monté de façon à pouvoir pivoter autour de l'axe d'articulation (27), et qui à son extrémité opposée à l'axe d'articulation (27) est relié à un étrésillon (29), par articulation par l'intermédiaire d'un axe de liaison (27') cet étrésillon (29) est guidé dans les échancrures (36) des côtés (26') étant susceptible d'être bloqué contre les côtés (26') par exemple par des vis de serrage (30).

5. Dispositif selon la revendication 4, caractérisé en ce que le point d'appui (31) est prévu sur l'appui (28) et une pièce antagoniste (35) est prévue à cet effet sur la partie inférieur de la console (23).

6. Dispositif selon une des revendications 1 à 5, caractérisé en ce que l'appareillage de fixation (24) susceptible d'être monté à poste fixe contre l'objet de fixation (16) est conçu de façon telle qu'il convient pour des consoles (23) de longueurs différentes avec un ou plusieurs centres de mesures (13).

*Fig.1*

*Fig. 1a*        *Fig. 1b*

*Fig. 1c*

*Fig.2*

_Fig. 3_

_Fig. 4_

_Fig. 5a_

_Fig. 5b_

_Fig. 6_

_Fig. 7_

*Fig. 8*

*Fig. 9*

10

_Fig. 10_

_Fig. 11_